# EUROPÄISCHE PATENTSCHRIFT

(11) **EP 2 766 129 B1**
(45) Veröffentlichungstag und Bekanntmachung des Hinweises auf die Patenterteilung: **20.01.2016**
(21) Anmeldenummer: 11768010.8
(22) Anmeldetag: 13.10.2011
(51) Int. Cl.: B05C 5/00, B05C 11/08, B05C 11/10, B05C 13/02, B65G 21/10, B05C 9/12, E04F 15/10

(54) **ANLAGE SOWIE VERFAHREN ZUR VORHANGBESCHICHTUNG VON PLATTENFÖRMIGEN BAUTEILEN**
INSTALLATION AND METHOD FOR CURTAIN-COATING PANEL-SHAPED COMPONENTS
INSTALLATION ET PROCÉDÉ D'ENDUCTION AU RIDEAU DE PIÈCES EN FORME DE PLAQUES

(43) Veröffentlichungstag der Anmeldung: 20.08.2014
(73) Patentinhaber: Kronoplus Technical AG, 9052 Niederteufen (CH)
(72) Erfinder: DÖHRING, Dieter, 01561 Großenhain (DE); SCHÄFER, Hans, 01561 Großenhain (DE)
(74) Vertreter: Hess, Peter K. G.
(86) Internationale Anmeldenummer: PCT/EP2011/067846
(87) Internationale Veröffentlichungsnummer: WO 2013/053391

(56) Entgegenhaltungen:
- GB-A- 984 639

## Beschreibung

### 1. Gebiet der Erfindung

Die vorliegende Erfindung betrifft eine Anlage sowie ein Verfahren zur Vorhangbeschichtung von plattenförmigen Bauteilen, wie etwa MDF- oder HDF-Platten.

### 2. Hintergrund der Erfindung

Aus dem Stand der Technik sind eine Reihe von Vorrichtungen und Verfahren bekannt, um die Oberflächen von plattenförmigen Bauteilen zu beschichten. Aus der WO 2009/074174 A1 desselben Anmelders ist beispielsweise eine Beschichtungsvorrichtung vorbekannt, bei der ein flüssiges Beschichtungsmaterial über eine Auftragswalze auf ein Auftragsband übertragen wird. Das Auftragsband wird wiederum mittels einer Druckwalze auf die zu beschichtenden plattenförmigen Bauteile gepresst, so dass das flüssige Beschichtungsmaterial vom Beschichtungsband auf die Oberfläche der zu beschichtenden Bauteile übertragen wird. Die plattenförmigen Bauteile werden hierzu über ein Transportband zusammen mit dem Beschichtungsband durch die Vorrichtung geführt. Ein Nachteil derartiger Walzenauftragsverfahren ist, sei es dass das Beschichtungsmaterial direkt von der Walze auf die zu beschichtenden Oberfläche abgegeben wird oder indirekt über ein Beschichtungsband, dass aufgrund der Rundung der Auftragswalze die übertragene Beschichtung eine wellige Oberfläche erhält. Die Berge und Täler dieser welligen Oberfläche sind jedoch so klein, dass die so hergestellten Oberflächen sich mit herkömmlichem Dreifarbendruck normalerweise sehr gut bedrucken lassen. Es hat sich jedoch gezeigt, dass diese wellige Oberflächenstruktur bei Digitaldruckverfahren nachteilig ist. Es wird vermutet, dass die, wenn auch sehr geringe Unebenheit der so beschichteten Oberflächen, möglicherweise aufgrund elektrischer Potenzialdifferenzen zu einem nicht optimalen Druckbild beim Digitaldruck führt.

Aus dem Stand der Technik sind auch Beschichtungsverfahren bekannt, die ohne umlaufende Walzen arbeiten. Insbesondere sind sogenannte Vorhangbeschichtungsverfahren bekannt, bei denen ein flüssiger Vorhang von Beschichtungsmaterial erzeugt wird, durch den die zu beschichtenden Bauteile geführt werden. Der Vorhang an flüssigem Beschichtungsmaterial kann beispielsweise aus einem Gießkopf austreten und aufgrund der Gravitation frei herabfallen. Es sind auch Gießköpfe bekannt, bei denen der flüssige Vorhang über Druckdüsen aktiv ausgegeben wird.

Ein typischer Vertreter einer derartigen Vorhangbeschichtung ist beispielsweise in der EP 1252 937 A1 beschrieben. Hier ist in der Figur 1 dieser Druckschrift ein schematisches Schaubild einer Anlage zur Vorhangbeschichtung gezeigt. Die plattenförmigen Bauteile werden über eine Einlauftransportreinrichtung durch den flüssigen Vorhang von Beschichtungsmaterial geführt und über eine Auslauftransporteinrichtung abgeführt. Einlauf- und Auslauftransporteinrichtungen umfassen dabei umlaufende Transportbänder. Bei Vorhangbeschichtungsanlagen zur Beschichtung von diskreten Bauteilen, wie etwa plattenförmigen Bauteilen, muss zwischen Einlauftransporteinrichtung und Auslauftransporteinrichtung zwingend ein Spalt vorgesehen sein, durch den der flüssige Vorhang fallen kann, um überschüssiges Beschichtungsmaterial abzuführen. Dies liegt daran, dass bei der Beschichtung von plattenförmigen Bauteilen unvermeidbar mehr oder weniger große Lücken zwischen zwei aufeinanderfolgenden Bauteilen existieren.

Die GB 984 639 A beschreibt eine weitere Vorhangbeschichtungsanlage, deren Einlauftransporteinrichtung ausgangsseitig in eine gegenüber der Auslauftransporteinrichtung erhöhte Position verstellbar ist.

Im Gegenteil hierzu sind auch Vorhangbeschichtungsanlagen bekannt, die zur Beschichtung von bahnförmigen Ausgangsmaterialien ausgelegt sind, wie etwa insbesondere zur Beschichtung von Papierbahnen. Bei diesen Anlagen ist üblicherweise kein Spalt notwendig, das die zu beschichtende Bahn keine Unterbrechung aufweist und sozusagen "endlos" durch den Beschichtungsvorhang geführt wird.

Obwohl die bekannten Anlagen und Verfahren zur Vorhangbeschichtung zufriedenstellend funktionieren, besteht dennoch Bedarf für Verbesserungen. Es hat sich insbesondere gezeigt, dass die Beschichtung von (leicht) gebogenen plattenförmigen Bauteilen problematisch ist, da diese beim Hindurchführen durch den Vorhang an ihren erhobenen Stellen anders beschichtet werden als an den relativ zu niedrigeren Stellen. Dies tritt insbesondere bei Bauteilen auf, die eine gewisse Flexibilität aufweisen, wie etwa große aber dünne Holzwerkstoffplatten. Insbesondere kann es vorkommen, dass der flüssige Vorhang von Beschichtungsmaterial am Endabschnitt einer durch den Vorhang geführten Platte abreißt, wenn dieser Endabschnitt nach unten gebogen ist. Außerdem besteht die Gefahr, dass bei nicht völlig ebenen Platten der vordere Abschnitt einer durch den Vorhang geführten Platte beim Kontakt mit der Auslauftransporteinrichtung einen Stoß erfährt, wenn der vordere Abschnitt nach unten gebogen ist. Hierdurch wird der Beschichtungsvorgang gestört. Diese Probleme ergeben sich verstärkt bei relativ dünnen plattenförmigen Bauteilen, d.h. Bauteilen die im Verhältnis zu ihrer Dicke eine große Länge haben und dementsprechend eine gewisse Flexibilität aufweisen.

Ausgehend von dem oben genannten Stand der Technik stellt sich die Aufgabe, eine Anlage und Verfahren zur Vorhangbeschichtung von plattenförmigen Bauteilen bereitzustellen, mit denen die oben genannten Nachteile des Standes der Technik ausgeräumt, bzw. vermindert werden können. Insbesondere stellt sich die Aufgabe eine Anlage und ein Verfahren bereitzustellen, mit dem dünne plattenförmige Bauteile bzw. unebene plattenförmige Bauteile in guter Qualität mit einem flüssigen Beschichtungsvorhang beschichtet werden können. Insbesondere soll mit der vorliegenden Erfindung eine gleichmäßige Beschichtung von Platten aus Holzwerkstoffen ermöglicht werden, die über ihre Länge eine leicht konvexe Wölbung aufweisen.

Diese und andere Aufgaben, die beim Lesen der folgenden Beschreibung noch genannt werden oder vom Fachmann erkannt werden können, werden mit einer Anlage zur Vorhangbeschichtung nach Anspruch 1 und einem Verfahren nach Anspruch 14 gelöst.

### 3. Ausführliche Beschreibung der Erfindung

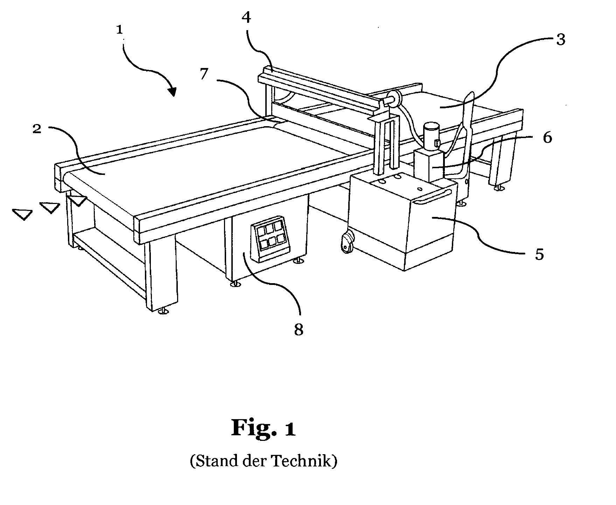

Um das Verständnis der Erfindung zu erleichtern, wird einleitend eine typische Anlage zur Vorhang-Beschichtung von plattenförmigen Bauteilen gemäß dem Stand der Technik anhand der Figur 1 erläutert.

In Figur 1 ist eine typische Anlage zur Vorhangbeschichtung von plattenförmigen Bauteilen schematisch dargestellt. Die Anlage umfasst eine Einlauftransportrichtung 2 sowie eine Auslauftransporteinrichtung 3, um plattenförmige Bauteile in Richtung der Pfeile unter einem Gießkopf 4 durchzuführen. Der Gießkopf 4 gibt einen flüssigen Vorhang von Beschichtungsmaterial aus, um die Oberflächen der zu beschichtenden Bauteile mit einem Überzug zu versehen. Zwischen der Einlauftransporteinrichtung 2 und der Auslauftransporteinrichtung 3 ist ein Spalt 7 erkennnbar, der direkt unter dem Gießkopf angeordnet ist. Dieser Spalt 7 ist bei allen Beschichtungsanlagen für plattenförmige Bauteile zwingend notwendig, da zwischen den einzelnen zu beschichtenden Bauteilen, wie etwa MDF-Platten, die durch die Anlage geführt werden notwendigerweise eine Lücke existiert. Das überschüssige Beschichtungsmaterial fällt dann durch den Spalt 7 in einen Auffangbehälter 5. Eine Pumpe 6 führt das im Auffangbehälter 5 gesammelte überschüssige Beschichtungsmaterial zurück zum Gießkopf 4. Mit dem Bezugszeichen 8 ist eine Steuerungsanlage bzw. ein dazu zugehöriger Antrieb für die Transporteinrichtungen bezeichnet.

Die erfindungsgemäße Anlage zur Vorhangbeschichtung unterscheidet sich von den Anlagen des vorbekannten Standes der Technik insbesondere dadurch, dass die Auslauftransporteinrichtung und/oder die Einlauftransporteinrichtung höhenverstellbar eingerichtet ist (bzw. sind), um während des Betriebs der Anlage eine relative Höhenverstellung der beiden Transporteinrichtungen zu erlauben. Dabei sind entsprechende Stellmittel so eingerichtet, das sie während des Beschichtungsbetriebs automatisch in Abhängigkeit der Position der zu beschichtenden Bauteile eine Höhenverstellung der Auslauftransporteinrichtung bzw. Einlauftransporteinrichtung durchführen. Als Stellmittel kommen beispielsweise ein oder mehrere Hydraulikzylinder in Betracht, die die Transporteinrichtungen anheben bzw. absenken. Die Anmelder haben festgestellt, dass die bekannten Anlangen zur Vorhangbeschichtung, wie sie etwa in Figur 1 gezeigt ist, zwar zufriedenstellend funktionieren, wenn die zu beschichtenden plattenförmigen Bauteile im Wesentlichen eben sind, jedoch häufig Schwierigkeiten haben Bauteile zu verarbeiten, die nicht vollständig eben sind, sondern beispielsweise eine gewisse Wölbung aufweisen. Dies gilt insbesondere für die Verarbeitung von relativ langen und dünnen plattenförmigen Bauteilen, die sich aufgrund ihres Eigengewichts biegen oder herstellbedingt eine leicht konkave oder konvexe Form haben.

Insbesondere ergibt sich dieses Problem bei der Verarbeitung von plattenförmigen Bauteilen aus Holzwerkstoffen, wie sie zur Herstellung von Fußbodenpaneelen verwendet werden. Diese Bauteile sind üblicherweise aus mitteldichter Faserplatte (MDF) oder hochdichter Faserplatte (HDF), und haben eine Länge von mehr als zwei Metern bei einer Dicke von nur wenigen Millimetern. Durch den Herstellprozess von MDF- und HDF-Platten bedingt, weisen derartige Paneele bzw. Platten häufig eine konkave, bzw. konvexe Krümmung auf. Diese Krümmung ist dabei äußerst gering und mit dem bloßen Auge kaum zu erkennen, jedoch kann sie dazu führen, das beim Transport eines derartigen Bauteils von der Einlauftransporteinrichtung zum Eingangsbereich der Auslauftransporteinrichtung die vordere Kante des Bauteils gegen die Auslauftransporteinrichtung stößt, wodurch der Beschichtungsprozess gestört wird. Bei konvexen Paneelen bzw. Platten, die durch eine derartige Anlage zur Vorhangbeschichtung befördert werden, ergibt sich zudem das Problem, das wenn der Endabschnitt eines derartigen Paneels bzw. Platte die Einlauftransporteinrichtung verlässt der Endabschnitt leicht nach unten absackt. Auch hierbei kann es zu einer Störung des Beschichtungsprozesses kommen, bis zu einem kurzzeitigen Abriss des flüssigen Beschichtungsvorhangs an dem betroffenen Endabschnitt des Paneels bzw. der Platte.

Die vorliegende Erfindung behebt diese und andere Probleme, in dem die Höhe von Einlauf- und/oder Auslauftransporteinrichtung automatisch unter Berücksichtigung des aktuellen Zustands des Beschichtungsprozesses angepasst wird. Um beispielsweise zu verhindern, dass es zu einer Störung der Beschichtung beim Endabschnitt eines zu beschichtenden Bauteils kommt, kann die Auslauftransporteinrichtung im Verhältnis zur Einlauftransporteinrichtung automatisch leicht angehoben werden, bevor der Endabschnitt eines zu beschichtenden Bauteils die Einlauftransporteinrichtung verlässt. Hierdurch wird das zu beschichtende Bauteil quasi schräg durch den Beschichtungsvorhang geführt, was zu verbesserten Beschichtungsergebnissen führt. Vorzugsweise sollten dabei die Stellmittel der Anlage so eingerichtet sein, dass sie automatisch zumindest den Eingangsbereich der Auslauftransporteinrichtung höher heben, als den Ausgangsbereich der Einlauftransporteinrichtung, was entweder durch ein Anheben der Auslauftransporteinrichtung oder ein Absenken der Einlauftransporteinrichtung erfolgen kann, bzw. einer Kombination davon. Es hat sich jedoch gezeigt, dass es ausreichend ist, wenn nur eine der beiden Transporteinrichtungen bewegt wird.

Weiter haben die Erfinder festgestellt, dass Beschichtungsprobleme von plattenförmigen Bauteilen vermieden werden können, wenn die Stellmittel der Anlage so eingerichtet sind, dass sie automatisch zumindest den Eingangsbereich der Auslauftransporteinrichtung etwas absenken, und/oder den Ausgangsbereich der Einlauftransporteinrichtung anheben, bevor ein vorderer Abschnitt eines zu beschichtenden Bauteils in Kontakt mit der Auslauftransporteinrichtung kommt. Hierdurch kann es verhindert werden, dass es zu einem Stoß kommt, wenn beispielsweise ihrer Länge nach kovex gewölbte plattenförmige Bauteile beschichtet werden sollen. Dies wird weiter unten anhand der Figuren genauer erläutert.

Generell ist es bevorzugt, dass die Stellmittel so eingerichtet sind, dass im Betrieb der Anlage für jedes zu beschichtende Bauteil eine Höhenverstellung durchgeführt wird.

Die erfindungsgemäße Anlage, sowie das erfindungsgemäße Verfahren zeigen besonders große Vorteile, wenn die zu verarbeitenden plattenförmigen Bauteile relativ dünn sind, d.h. eine Länge haben, die einem Vielfachen der Dicke der Bauteile entspricht. Dies gilt insbesondere für die Verarbeitung von Bauteilen, bei denen das Verhältnis Länge zu Dicke (L/D) mindestens 150 beträgt, vorzugsweise mindestens 190, mehr bevorzugt mindestens 240, noch mehr bevorzugt mindestens 280 und am meisten bevorzugt mindestens 300. Beispielsweise werden für die Verarbeitung von plattenförmigen Bauteilen zur Herstellung von Laminatpaneelen üblicherweise MDF- oder HDF-Platten verwendet, die eine Länge von etwa 280 cm und eine Breite von 100 bis 220 cm aufweisen, jedoch nur eine Dicke von etwa 6 bis 10 mm haben. Derartig lange und dünne Platten biegen sich durch ihr Eigengewicht und sind zudem häufig nicht vollständig eben, sondern weisen eine über ihre Länge leicht konvexe Wölbung auf (bzw. konkave Wölbung, je nachdem welche Seite des Paneels oben liegt). Wenn derartige Platten der Länge nach durch den Beschichtungsvorhang geführt werden, kommt es häufig vor, dass sie mit ihrem vorderen Abschnitt gegen die Auslauftransporteinrichtung stoßen und es zu einem Vorhang-Abriss kommt, wenn der hintere Abschnitt die Einlauftransporteinrichtung verlässt und dabei etwas nach unten fällt bzw. schwingt.

Es ist generell bevorzugt, dass die Transporteinrichtungen länger sind als die größte Länge der plattenförmigen Bauteile, wie etwa 1,3 mal so lang, bevorzugt 1,5 mal so lang.

Generell ist die vorliegende Erfindung besonders zur Beschichtung von Holzwerkstoffplatten geeignet. Hierunter fallen alle Holzwerkstoffe im weitesten Sinne, also Platten, die aus Holz bestehen, bzw. die unter Verwendung von Holzmaterialien hergestellt sind. Hierzu gehören beispielsweise aber nicht abschließend Platten aus OSB, MDF oder HDF, Spanplatten, Voll- und Massivholz, Furnier- und Fertigparkett und andere. Die Vorrichtung ist ebenso geeignet, dünne Kunststoffplatten beispielsweise aus PVC oder aus dünnen Kompaktlaminaten sowie mineralisch gebundene Faserplatten zu beschichten.

Vorzugsweise werden die zu beschichtenden plattenförmigen Bauteile mit hoher Geschwindigkeit durch die Anlage transportiert. Hierzu sind Einlauftransporteinrichtungen und Auslauftransporteinrichtungen so eingerichtet, das sie im Betrieb der Anlage die zu beschichtenden Bauteile mit einer Geschwindigkeit von mindestens 50 Meter pro Minute (m/min), vorzugsweise 80 Meter pro Minute, noch mehr bevorzugt mindestens 100 Meter pro Minute und am meisten bevorzugt mit mindestens 110 Meter pro Minute durch den Vorhang transportieren. Die oben beschriebenen Beschichtungsprobleme treten insbesondere bei den genannten hohen Transportgeschwindigkeiten auf, und es hat sich gezeigt, dass die erfindungsgemäße Anlage, bzw. das erfindungsgemäße Verfahren, hier zu besonders großen Verbesserungen führt.

Generell ist es bevorzugt, dass die plattenförmigen Bauteile in Längsrichtung durch den Vorhang geführt werden, d.h. bei nicht quadratischen Bauteilen so, dass die lange Seite möglichst lotrecht zum Vorhang gerichtet ist.

Die Stellmittel sollten so eingerichtet sein, dass die Hubgeschwindigkeit beim Heben und Senken der Transporteinrichtungen nicht zu groß, jedoch auch nicht zu klein ist. Wird beispielsweise die Auslauftransporteinrichtung zu schnell abgesenkt, d.h. in Fallrichtung des Vorhangs, so kann es zu einem Abriss des flüssigen Vorhangs an der zu beschichtenden Oberfläche des Bauteils kommen. Bei zu schnellem Anheben, d.h. Entgegen der Fallrichtung des Vorhangs, kann es an der betroffenen Oberfläche zu einem Überschuss an aufgetragenem Beschichtungsmaterial kommen. Es hat sich daher gezeigt, das die Hubgeschwindigkeit, insbesondere beim Anheben zumindest des Eingangsbereichs der Auslauftransporteinrichtung, bevorzugt zwischen 1 cm/s und 10 cm/s sein sollte, noch mehr bevorzugt zwischen 1,5 cm/s und 7 cm/s, noch mehr bevorzugt zwischen 2 cm/s und 6 cm/s und am meisten bevorzugt zwischen 3 cm/s und 5 cm/s sein sollte. Dies gilt insbesondere in Zusammenhang mit den oben genannten Transportgeschwindigkeiten.

Beim erfindungsgemäßen Verfahren zum Beschichten von plattenförmigen Bauteilen mittels eines flüssigen Vorhangs von Beschichtungsmaterial wird zumindest der Eingangsbereich der Auslauftransporteinrichtung in Relation zur Einlauftransporteinrichtung angehoben und/oder der Ausgangsbereich der Einlauftransporteinrichtung in Relation zur Auslauftransporteinrichtung abgesenkt, bevor der Endabschnitt eines zu beschichtenden Bauteils die Einlauftransporteinrichtung verlässt. Mit der Formulierung "Eingangsbereich der Auslauftransporteinrichtung" oder "Ausgangsbereich der Transporteinrichtung" soll angezeigt werden, dass nicht notwendigerweise die vollständige Transporteinrichtung angehoben werden muss, sondern dass es für die beabsichtigten Zwecke ausreichend ist, wenn die betroffenen Bereich angehoben werden.

Tatsächlich ist bei den bevorzugten Ausführungsformen die Auslauftransporteinrichtung an ihrem Ausgangsbereich drehbar gelagert, so dass durch eine Drehung um diesen Lagerpunkt eine Höhenverstellung des Eingangsbereichs der

Auslauftransporteinrichtung bewirkt werden kann.

### 4. Beschreibung von bevorzugten Ausführungsformen

Im Folgenden wird die vorliegende Erfindung unter Bezugnahme auf die beigefügten Figuren genauer erläutert. Hierbei zeigt:
- Figur 1: eine Vorhangbeschichtungsanlage nach dem Stand der Technik;
- Figur 2: eine schematische Darstellung einer erfindungsgemäß verbesserten Anlage zur Vorhangbeschichtung;
- Figuren 3 - 10: die Anlage der Figur 2 in verschiedenen Betriebszuständen;
- Figur 11: eine schematische Ansicht einer alternativen erfindungsgemäßen Anlage; und
- Figur 12: eine weitere Alternative einer erfindungsgemäßen Anlage.

Bezüglich der schematischen Darstellungen 2 - 12 erkennt der Fachmann, dass diese nur die grundlegenden Bauteile zeigen und nicht maßstabsgerecht sind. Beispielsweise sind die Transporteinrichtungen in der Praxis erheblich länger als die zu beschichtenden Bauteile und die zu beschichteten Bauteile sind im Verhältnis zu ihrer Länge erheblich dünner. In einer existierenden Prototypanlage sind die beiden Transporteinrichtung beispielsweise jeweils über 4 Meter lang und die zu beschichteten Bauteile sind Holzwerkstoffpaneele für die Herstellung von Fußbodenbelägen, insbesondere Laminat-Fußbodenbelägen, mit einer Länge von über 2 Metern bei einer Dicke von nur 6 - 10 mm. Der Spalt zwischen den beiden Transporteinrichtungen des Prototyps beträgt etwa 50 cm.

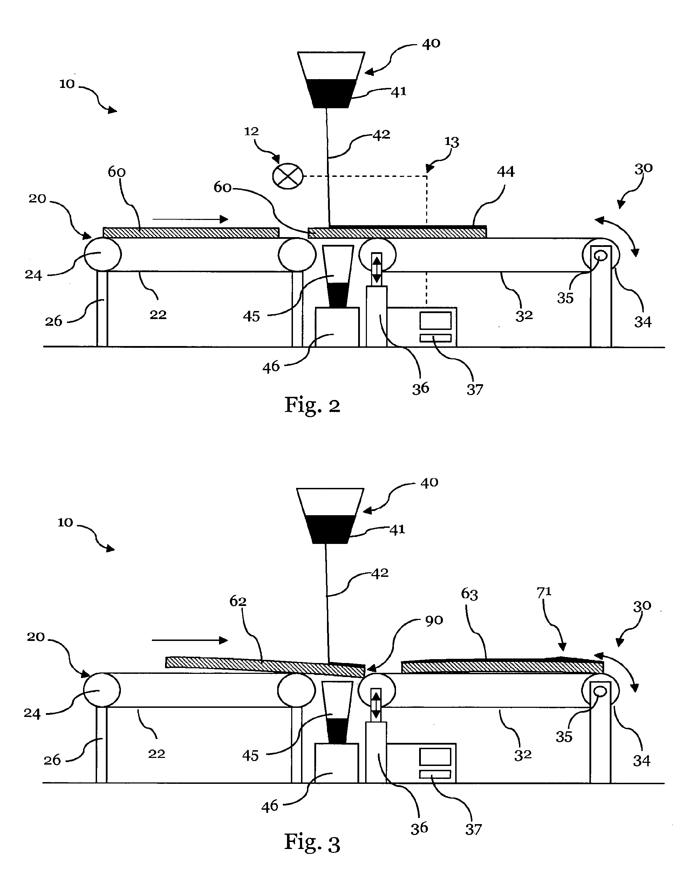

Im Folgenden wird die prinzipielle Konstruktion der erfindungsgemäßen Anlage anhand der Figur 2 erläutert. Die schematischen Darstellungen der Figuren 3 - 12 sind zu großen Teilen identisch, sodass bei der Erläuterung dieser weiteren Figuren jeweils nur auf die entsprechenden Unterschiede eingegangen wird.

Figur 2 zeigt eine bevorzugte Ausführungsform einer erfindungsgemäßen Anlage 10 zur Vorhangbeschichtung von plattenförmigen Bauteilen. Die Anlage 10 umfasst eine Einlauftransporteinrichtung 20, die ein umlaufendes Transportband 22 aufweist, das über entsprechende Walzen 24 geführt wird. Die Einlauftransporteinrichtung 20 ist mittels eines festen Gestells 26 ortsfest eingerichtet. Auf der Oberseite der Einlauftransporteinrichtung 20 wird ein erstes zu beschichtendes plattenförmiges Bauteil, eine Platte bzw. ein Paneel 60, in Richtung des Pfeils transportiert. In Transportrichtung vor der Platte 60 befindet sich eine weitere Platte 61, die sich bereits auf einer Auslauftransporteinrichtung 30 befindet und von dieser weiter befördert wird. Die Auslauftransporteinrichtung weist ebenfalls ein umlaufendes Band 32 auf, das über Walzen 34 geführt ist. Anders als die Einlauftransporteinrichtung 20 ist die Auslauftransporteinrichtung 30 jedoch nicht fest mit einem Gestell fixiert, sondern an ihrem Ausgangsbereich über ein Gelenk 35 drehbar gelagert. An der gegenüberliegenden Seite, also an dem Eingangsbereich, ist die Auslauftransporteinrichtung 30 über einen Hydraulikzylinder 36 höhenverstellbar eingerichtet. Bei einer Hubbewegung des Hydraulikzylinders 36 dreht sich somit das Transportband 32 im Wesentlichen um das Drehgelenk 35, wie es durch den Doppelpfeil bei Drehgelenk 35 angedeutet ist. In der Praxis beträgt die Hubhöhe bei einer Länge der Auslauftransporteinrichtung 30 von 4,5 Metern nur wenige cm, beispielsweise maximal 5 - 6 cm. In den Figuren ist die Hubbewegung daher nicht maßstabsgerecht, sondern stärker dargestellt als sie eigentlich ist. Dem Hydraulikzylinder 36 zugeordnet ist eine Steuereinrichtung 37 vorgesehen, die über eine Datenleitung 13 mit einer Lichtschranke 12 in Kommunikation ist. Die Lichtschranke 12 dient als Mittel zur Erfassung der Position der zu beschichtenden Bauteile auf den Transporteinrichtungen. Die Lichtschranke 12 erfasst beispielsweise wo die vordere Kante des Panels 60 ist, sodass zusammen mit den Informationen über die Transportgeschwindigkeit die Position des Panels 60 in Relation zu den weiteren Anlagenteilen berechnet und bestimmt werden kann. Alternativ sind selbstverständlich auch andere Mittel zur Erfassung der Position der zu beschichtenden Bauteile möglich, wie etwa Kamerasysteme oder Laser o.ä. Dem Fachmann sind aus dem Stand der Technik eine Reihe von Mitteln zur Erfassung und Überwachung der Position bzw. des Weges derartiger zu beschichtender Bauteile bekannt, so dass hier von einer detaillierten Erläuterung derartiger Systeme abgesehen wird.

Mit Bezugszeichen 40 ist ein schematisch angedeuteter Gießkopf bezeichnet, der mit einem Beschichtungsmittel 41 gefüllt ist. Durch einen entsprechenden Gießspalt fließt das Beschichtungsmittel 41 in Form eines flüssigen Vorhangs 42 herunter. Das Beschichtungsmittel kann beispielsweise ein Lack oder Harz sein, insbesondere jedoch eine Grundierungsschicht für einen später aufzubringenden dekorativen Druck. Die Art und Weise wie der Beschichtungsvorhang erzeugt wird ist für die vorliegende Erfindung nicht wesentlich und dem Fachmann sind eine Reihe von möglichen Verfahren zur Erzeugung eines derartigen Vorhangs bekannt. Zwischen den beiden Transporteinrichtungen 20 und 30 ist ein Spalt vorgesehen, der in der Praxis etwa 50 cm beträgt. In diesem Spalt ist eine trichterförmige Auffangwanne 45 vorgesehen, in den der flüssige Vorhang fällt, wenn sich kein zu beschichtendes Bauteil unter dem Vorhang 42 befindet. Die trichterförmige Auffangwanne 45 ist über eine Pumpe 46 und entsprechende, nicht dargestellte Leitungen mit dem Gießkopf 45 verbunden, um das überschüssige Beschichtungsmittel wieder in den Gießkopf zurück zu pumpen. Auch diese Anlagenteile sind dem Fachmann aus Vorhangbeschichtungsanlagen bekannt, sodass auf eine nähere Erläuterung derselben verzichtet wird.

Die Figur 2 zeigt den Idealfall bei dem die zu beschichtenden Platten 60, 61 keine übermäßigen Krümmungen aufweisen und sich auch nicht durch ihr Eigengewicht nach unten abbiegen wenn sie über den Spalt zwischen den Transporteinrichtungen geführt werden. In der Praxis ist es jedoch häufig so, dass die zu beschichtenden Platten eine Krümmung über ihre Länge aufweisen, bzw. so dünn sind, dass sie sich durch ihr Eigengewicht leicht nach unten biegen, wenn sie die Einlauftransporteinrichtung verlassen. Dieser Fall ist in Figur 3 schematisch dargestellt (in den Figuren 3 bis 12 sind die Mittel 12, 13 zur Erfassung der Position der Platten aus Gründen der Klarheit weggelassen worden). Bezugnehmend auf Figur 3 ist zu erkennen, dass die zu beschichtenden Platten 62, 63 über ihre Länge eine leicht konvexe Wölbung aufweisen. Die Wölbung ist den Figuren übertrieben dargestellt um sie erkennbar zu machen. Aufgrund der Wölbung stößt die vordere Kante der Platte 62 an Position 91 gegen die Auslauftransporteinrichtung 30, wodurch es einen leichten Schlag gibt. Dieser führt an den Platten an entsprechender Stelle 71 zu einem Beschichtungsfehler.

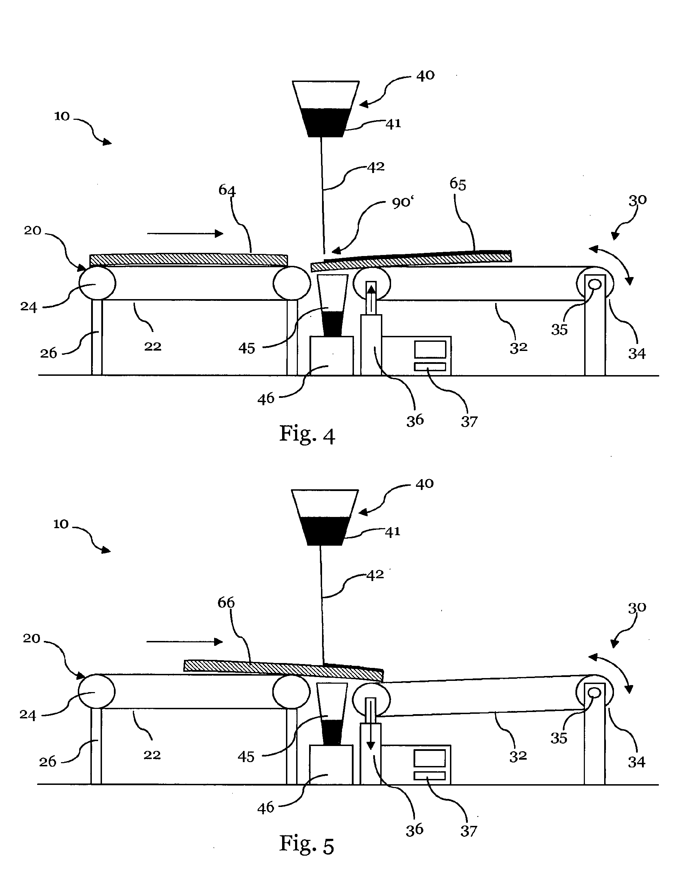

Die Figur 4 zeigt ein weiteres Beispiel eines möglichen Beschichtungsfehlers, der durch unebene zu beschichtende Platten bzw. durch sehr dünne Platten entstehen kann. In Figur 4 hat der Endabschnitt der Platte 65 gerade die Einlauftransporteinrichtung verlassen. Aufgrund der Krümmung der Platte 65 schwingt der Endabschnitt der Platte etwas nach unten, sodass es an der Position 90' kurzzeitig zu einem Vorhangabriss kommt und damit zu einem Beschichtungsfehler. In der Praxis genügt schon ein Herabschwingen des Endabschnitts der Platte 65 um ein bis zwei cm um einen Beschichtungsfehler zu erzeugen.

In den Figuren 5 - 10 ist schematisch dargestellt, wie die oben unter Bezugnahme auf die Figuren 3 und 4 beispielhaft beschriebenen Beschichtungsfehler erfindungsgemäß vermieden werden können. In Figur 5 ist die Auslauftransporteinrichtung 30 mittels des Hydraulikzylinders in Relation zur Einlauftransporteinrichtung 20 abgesenkt. Erfindungsgemäß erfolgte die Absenkung der Auslauftransporteinrichtung bereits bevor die Platte 66 bzw. ein vorderer Abschnitt dieser Platte in Kontakt mit der Auslauftransporteinrichtung kommt. Auf diese Weise kann der unerwünschte Stoß, der in Figur 3 illustriert ist, vermieden werden.

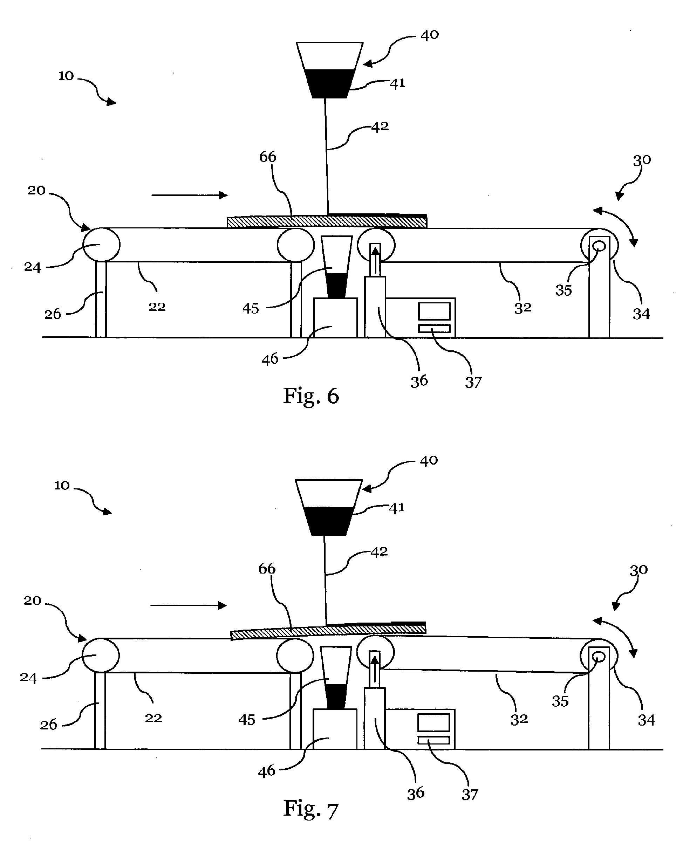

Figur 6 zeigt dieselbe Platte 66, nachdem sie etwas weiter durch die Anlage 10 transportiert wurde. Nachdem der vordere Abschnitt der Platte 66 in Kontakt mit dem Transportband 32 der Auslauftransporteinrichtung 30 kam, wurde die Auslauftransporteinrichtung, bzw. der Eingangsbereich derselben, durch den Hydraulikzylinder 36 wieder angehoben, sodass die Transporteinrichtungen 20 und 30 wieder auf derselben Höhe sind. In Figur 7 ist die Platte 66 noch etwas weiter durch die Anlage geführt und die Auslauftransporteinrichtung ist noch ein Stück weiter angehoben, sodass zumindest der Eingangsbereich der Auslauftransporteinrichtung höher eingestellt ist, als der Ausgangsbereich der Einlauftransporteinrichtung. Die Platte 66 wird somit leicht schräg durch den Vorhang 42 geführt, was überraschend zu besonders homogenen Beschichtungen führt, insbesondere bei leicht gekrümmten Platten.

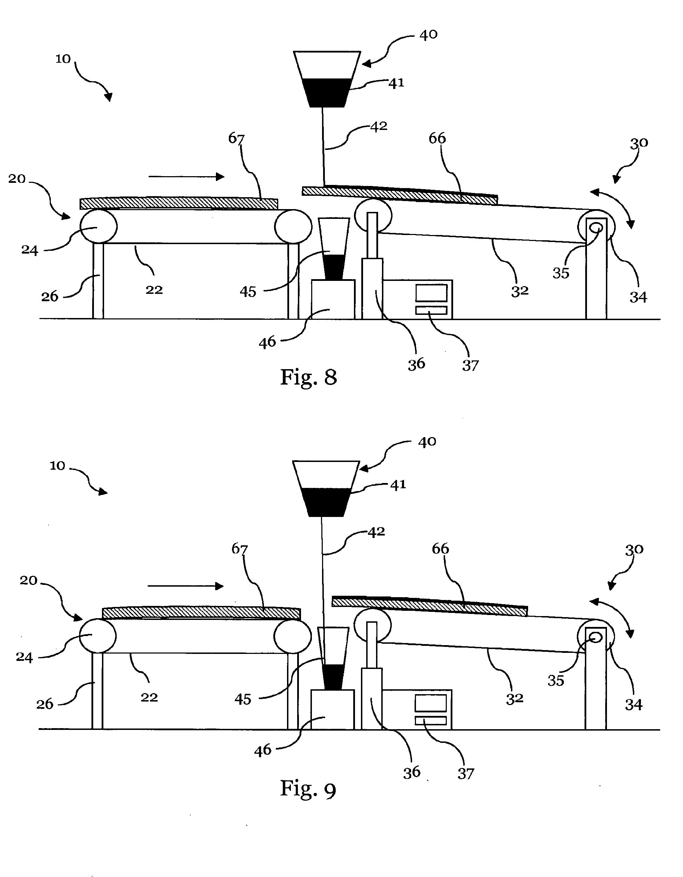

Figur 8 zeigt diesselbe Platte 66, kurz nachdem der Endabschnitt der Platte die Einlauftransporteinrichtung verlassen hat. Die Auslauftransporteinrichtung ist in Figur 8 in ihrer höchsten Position dargestellt. Die Platte 66 wird also mit ihrem Endabschnitt "schräg" durch den Vorhang 42 geführt. Hierdurch werden die Beschichtungsfehler, die in Zusammenhang mit Figur 4 erläutert wurden, wirksam vermieden. Ein "Herunterwippen" des Endabschnitts der Platte wie in Figur 4 wird dadurch vermieden, dass die Platte 66 durch die Hubbewegung vorsichtig angehoben wird, zumindest vorsichtig im Vergleich zu einem unkontrollierten Herabwippen, zu dem es kommt, wenn Einlauf- und Auslauftransporteinrichtung dieselbe Höhe haben.

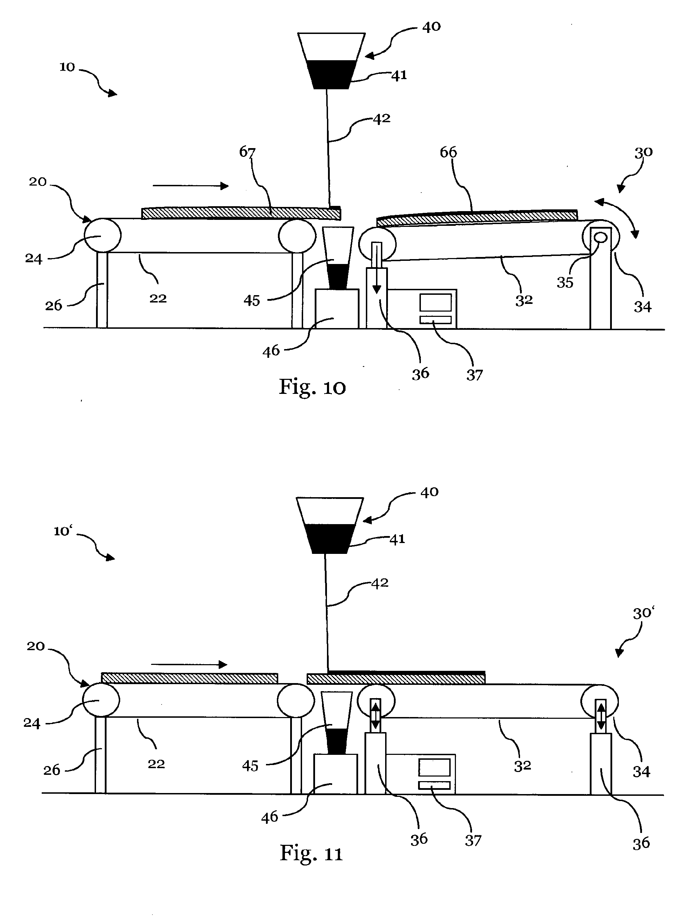

In Figur 9 hat die Platte 66 den Vorhang 42 verlassen und ist vollständig und ohne Fehler beschichtet. Die nächste Platte 67 befindet sich noch vollständig auf der Einlauftransporteinrichtung und der Vorhang 42 fällt in den Auffangbehälter 45, sodass das überschüssiges Beschichtungsmaterial mit der Pumpe 46 wieder zurück in den Gießkopf gepumpt werden kann. In dem in Figur 9 abgebildeten Betriebszustand (es sollte bedacht werden, dass sich die Platten 66 und 67 mit etwa 100 Meter pro Minute bewegen) bewirken die Stellmittel (d.h. beispielsweise Hydraulikzylinder 36 und Steuereinrichtung 37), dass die Auslauftransporteinrichtung wieder abgesenkt wird, um die nachfolgende Platte 67 aufzunehmen. In Figur 10 ist zu erkennen, dass die Auslauftransporteinrichtung bzw. der Eingangsbereich derselben in Relation zur Einlauftransporteinrichtung abgesenkt wurde, und niedriger eingestellt wurde, als die Höhe des Ausgangsbereichs der Einlauftransporteinrichtung 20. Die Platte 67 kann daher stoßfrei vom Transportband 32 der Auslauftransporteinrichtung 30 übernommen und weiter durch die Anlage transportiert werden, wie es in Figur 5 gezeigt ist.

Die in den Figuren 5 und 10 dargestellte Konfiguration der Auslauftransporteinrichtung sollte vorzugsweise zu Beginn des Beschichtungsverfahrens eingestellt werden, d.h. bevor ein vorderer Abschnitt eines zu beschichtenden Paneels bzw. Platte in Kontakt und damit möglicherweise in Stoßberührung mit der Auslauftransporteinrichtung kommt.

Wie unter Bezugnahme auf die Figuren beschrieben wurde, erfolgt die Steuerung der relativen vertikalen Position der Auslauftransporteinrichtung automatisch in Abhängigkeit von der Position der zu beschichtenden Bauteile, wie etwa der in den Figuren gezeigten Platten. Wenn die Mittel zur Erfassung der Position beispielsweise erfassen, dass der vordere Abschnitt eines Bauteils kurz vor dem Vorhang ist, so wird diese Positionsinformation an die Stellmittel übertragen, die dann automatisch ein Absenken der Auslauftransporteinrichtung in die in Figur 5 und 10 gezeigte Position bewirken. Auf ähnliche Weise kann ein automatisches Anheben der Auslauftransporteinrichtung 30 bewirkt werden, die Erfassung eines Endabschnitts eines Bauteils anzeigt, dass das Bauteil kurz vor dem Verlassen der Auslauftransporteinrichtung ist.

Der Spalt zwischen den beiden Transporteinrichtungen erstreckt sich, wie es aus dem Stand der Technik bekannt ist, quer zur Transportrichtung der zu beschichtenden Bauteile und die Länge des Spalts sollte mindestens der Länge des Vorhangs entsprechen, sodass der Vorhang vollständig von der Auffangwanne 45 aufgenommen werden kann. Aus den schematischen Figuren ist dem Fachmann auch klar, dass die gezeigte und beanspruchte Anlage sowie das Verfahren nicht dazu eingerichtet sind bahnförmiges Material, wie etwa Papierbahnen, zu verarbeiten.

Aufgrund der sehr gleichmäßigen störungsfreien Beschichtung mittels des erfindungsgemäßen Vorhangbeschichtungsverfahrens sind die beschichteten Platten sehr gut dazu geeignet mittels einer Digitaldruckeinrichtung mit einem Dekor bedruckt zu werden. Die hierin beschriebene Anlage ist generell daher besonders dazu geeignet in einer Einrichtung zur Herstellung von direkt bedruckten Fußbodenpaneelen verwendet zu werden. In einer derartigen Einrichtung kann beispielsweise der gezeigten Anlage zur Vorhangbeschichtung nachgeordnet eine Digitaldruckeinrichtung vorgesehen sein, um direkt auf eine Oberfläche der beschichteten Bauteile im Digitaldruck ein Dekor zu drucken. Die so erzeugten Druckbilder sind von erheblich besserer Qualität als digitale Druckbilder, die auf eine Oberflächenbeschichtung gedruckt werden, die mittels herkömmlichen Walzenbeschichtungsverfahren aufgebracht wurde.

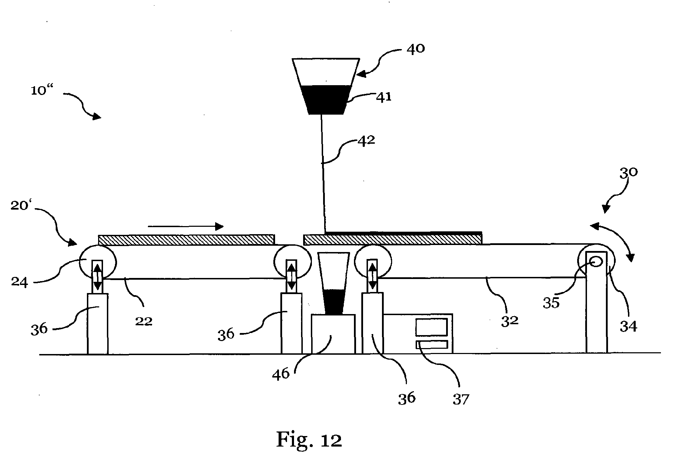

In Figur 11 ist schematisch eine alternative Anlage 10' gezeigt, bei der die Auslauftransporteinrichtung 30' an beiden Enden über zwei (oder mehr) Hydraulikzylinder 36 höhenverstellbar eingerichtet ist. In Figur 12 ist schematisch eine beispielhafte alternative Anlage 10" gezeigt, in der auch die Einlauftransporteinrichtung 20' über Hydraulikzylinder 36 höhenverstellbar eingerichtet ist. Es ist grundsätzlich bevorzugt nur die Auslauftransporteinrichtung höhenverstellbar einzurichten, und zwar mittels des Drehgelenks wie in den Figuren gezeigt, da dies apparativ den geringsten Aufwand bedeutet und zu zufrieden stellenden Ergebnissen führt. Es ist jedoch ebenfalls denkbar, nur die Einlauftransporteinrichtung mit einer entsprechenden Höhenverstellbarkeit zu versehen oder beide Transporteinrichtungen wie in Figur 12 gezeigt.

Die automatische Höhenverstellbarkeit der Transporteinrichtungen erlaubt nicht nur die Vermeidung von Beschichtungsfehlern bei unregelmäßigen Bauteiloberflächen oder sehr dünnen, biegsamen Platten, sondern erlaubt grundsätzlich und überraschend eine homogenere Beschichtung, aufgrund der Möglichkeit, die Bauteile schräg durch den Beschichtungsvorhang zu bewegen.

### Im Nachfolgenden werden weitere Beispiele beschrieben, die das Verständnis der Erfindung erleichtern sollen

1. Anlage (10) zur Vorhangbeschichtung von plattenförmigen Bauteilen (60), umfassend:
   - eine Vorrichtung (40) zum Erzeugen eines flüssigen Vorhangs (42) von Beschichtungsmaterial;
   - eine Einlauftransporteinrichtung (20) und eine Auslauftransporteinrichtung (30), um die zu beschichtenden Bauteile durch den Vorhang (42) zu führen, wobei zwischen der Einlauftransporteinrichtung (20) und der Auslauftransporteinrichtung (30) ein Spalt vorgesehen ist, durch den überschüssiges Beschichtungsmaterial abführbar ist; **dadurch gekennzeichnet,** dass die Auslauftransporteinrichtung (30) und/oder die Einlauftransporteinrichtung (20) höhenverstellbar eingerichtet ist bzw. sind und die Anlage (10) weiter Stellmittel (36, 37) umfasst, die so eingerichtet sind, dass sie während des Beschichtungsbetriebs automatisch in Abhängigkeit der Position der zu beschichtenden Bauteile eine relative Höhenverstellung von Einlauftransporteinrichtung (20) und Auslauftransporteinrichtung (30) durchführen.
2. Anlage zur Vorhangbeschichtung nach Beispiel 1, **dadurch gekennzeichnet,** dass die Stellmittel (36, 37) so eingerichtet sind, dass sie automatisch eine Höhenverstellung an Auslauftransporteinrichtung (20) und/oder Einlauftransporteinrichtung (30) durchführen, um zumindest den Eingangsbereich der Auslauftransporteinrichtung anzuheben und/oder den Ausgangsbereich der Einlauftransporteinrichtung abzusenken, bevor der Endabschnitt eines zu beschichtenden Bauteils die Einlauftransporteinrichtung verlässt.
3. Anlage zur Vorhangbeschichtung nach Beispiel 2, **dadurch gekennzeichnet,** dass die Stellmittel (36, 37) so eingerichtet sind, dass sie dabei automatisch zumindest der Eingangsbereich der Auslauftransporteinrichtung (30) höher einstellen, als der Ausgangsbereich der Einlauftransporteinrichtung (20).
4. Anlage zur Vorhangbeschichtung nach einem der vorhergehenden Beispiele, **dadurch gekennzeichnet,** dass die Stellmittel (36, 37) so eingerichtet sind, dass sie automatisch zumindest den Eingangsbereich der Auslauftransporteinrichtung (30) absenken und/oder den Ausgangsbereich der Einlauftransporteinrichtung (20) anheben, bevor ein vorderer Abschnitt eines zu beschichtenden Bauteils in Kontakt mit der Auslauftransporteinrichtung (30) kommt.
5. Anlage zur Vorhangbeschichtung nach dem vorhergehenden Beispiel, **dadurch gekennzeichnet,** dass die Stellmittel (36, 37) so eingerichtet sind, dass sie dabei automatisch zumindest den Eingangsbereich der Auslauftransporteinrichtung (30) niedriger einstellen, als den Ausgangsbereich der Einlauftransporteinrichtung (20).
6. Anlage zur Vorhangbeschichtung nach einem der vorhergehenden Beispiele, **dadurch gekennzeichnet,** dass die Auslauftransporteinrichtung (30) an ihrem Ausgangsbereich drehbar gelagert (35) ist, um durch Drehung eine Höhenverstellung zumindest des Eingangsbereichs der Auslauftransporteinrichtung (30) zu bewirken und/oder dass die Einlauftransporteinrichtung an ihrem Eingangsbereich drehbar gelagert ist, um durch Drehung eine Höhenverstellung zumindest des Ausgangsbereichs der Einlauftransporteinrichtung zu bewirken.
7. Anlage zur Vorhangbeschichtung nach einem der vorhergehenden Beispiele, **dadurch gekennzeichnet,** dass die plattenförmigen Bauteile im Wesentlichen rechteckig sind und eine Länge haben, die einem Vielfachen der Dicke der Bauteile entspricht, wobei das Verhältnis Länge zu Dicke (L/d) mindestens 150 beträgt, vorzugsweise mindestens 190, mehr bevorzugt mindestens 240, noch mehr bevorzugt mindestens 280 und am meisten bevorzugt mindestens 300 beträgt.
8. Anlage zur Vorhangbeschichtung nach einem der vorhergehenden Beispiele, **dadurch gekennzeichnet,** dass Einlauftransporteinrichtung (20) und Auslauftransporteinrichtung (30) so eingerichtet sind, dass sie im Betrieb der Anlage die zu beschichtenden plattenförmigen Bauteile mit einer Geschwindigkeit von mindestens 50 m/min, vorzugsweise mindestens 80 m/min, noch mehr bevorzugt mindestens 100 m/min und am meisten bevorzugt mit mindestens 110 m/min durch den Vorhang transportieren.
9. Anlage zur Vorhangbeschichtung nach einem der vorhergehenden Beispiele, **dadurch gekennzeichnet,** dass die Stellmittel (36, 37) so eingerichtet sind, dass die Hubgeschwindigkeit beim Anheben zwischen 1 cm/sec und 10 cm/sec ist, vorzugsweise zwischen 1,5 cm/sec und 7 cm/sec ist, mehr bevorzugt 2 cm/sec und 6 cm/sec ist und am meisten bevorzugt zwischen 3 cm/sec und 5 cm/sec ist.
10. Anlage zur Vorhangbeschichtung nach einem der vorhergehenden Beispiele, **dadurch gekennzeichnet,** dass Einlauftransporteinrichtung (20) und Auslauftransporteinrichtung (30) Transportbänder (22, 32) umfassen.
11. Anlage zur Vorhangbeschichtung nach einem der vorhergehenden Beispiele, **dadurch gekennzeichnet,** dass die Anlage weiter Mittel (12) zur Erfassung der Position der zu beschichtenden Bauteile auf den Transporteinrichtungen (20, 30) umfasst.
12. Anlage zur Vorhangbeschichtung nach dem vorhergehenden Beispiel, **dadurch gekennzeichnet,** dass die Mittel (12) zur Erfassung der Position der zu beschichtenden Bauteile in Kommunikation (13) mit den Stellmitteln (36, 37) sind.
13. Anlage zur Vorhangbeschichtung nach einem der vorhergehenden Beispiele, **dadurch gekennzeichnet,** dass die Vorrichtung zum Erzeugen eines flüssigen Vorhangs von Beschichtungsmaterial einen Gießkopf (40) umfasst, der einen frei fallenden Vorhang (42) erzeugt.
14. Verfahren zum Beschichten von plattenförmigen Bauteilen mittels eines flüssigen Vorhangs von Beschichtungsmaterial, umfassend:
   - Bereitstellen eines flüssigen Vorhangs von Beschichtungsmaterial;
   - Bereitstellen einer Einlauftransporteinrichtung und einer Auslauftransporteinrichtung, um die zu beschichtenden Bauteile durch den Vorhang zu führen, wobei zwischen der Einlauftransporteinrichtung und der Auslauftransporteinrichtung ein Spalt vorgesehen ist, durch den überschüssiges Beschichtungsmaterial abführbar ist; wobei die Bauteile von der Einlauftransporteinrichtung durch den Vorhang zur Auslauftransporteinrichtung transportiert werden, **dadurch gekennzeichnet,** dass zumindest der Eingangsbereich der Auslauftransporteinrichtung in Relation zur Einlauftransporteinrichtung angehoben wird und/oder der Ausgangsbereich der Einlauftransporteinrichtung in Relation zur Auslauftransporteinrichtung abgesenkt wird, bevor der Endabschnitt eines zu beschichtenden Bauteils die Einlauftransporteinrichtung verlässt.
15. Verfahren nach Beispiel 14, **dadurch gekennzeichnet,** dass durch die Höheneinstellung von Einlauftransporteinrichtung und/oder Auslauftransporteinrichtung zumindest der Eingangsbereich der Auslauftransporteinrichtung höher eingestellt wird als der Ausgangsbereich der Einlauftransporteinrichtung.
16. Verfahren nach einem der vorhergehenden Beispiele 14 oder 15, **dadurch gekennzeichnet,** dass nachdem der Endabschnitt eines vorhergehenden Bauteils die Einlauftransporteinrichtung verlassen hat, und vorzugsweise erst nachdem der Endabschnitt eines vorhergehenden Bauteils auch den Vorhang verlassen hat, zumindest der Eingangsbereich der Auslauftransporteinrichtung automatisch wieder absenkt wird und/oder zumindest der Ausgangsbereich der Einlauftransporteinrichtung automatisch angehoben wird, bevor ein vorderer Abschnitt eines nachfolgenden zu beschichtenden Bauteils in Kontakt mit der Auslauftransporteinrichtung kommt.
17. Verfahren nach dem vorhergehenden Beispiel, **dadurch gekennzeichnet,** dass dabei zumindest der Eingangsbereich der Auslauftransporteinrichtung niedriger eingestellt wird, als die Höhe des Ausgangsbereichs der Einlauftransporteinrichtung.
18. Verfahren nach einem der vorhergehenden Beispiele 14 bis 17, **dadurch gekennzeichnet,** dass die Hubgeschwindigkeit zwischen 1 cm/sec und 10 cm/sec ist, vorzugsweise zwischen 1,5 cm/sec und 7 cm/sec, mehr bevorzugt 2 cm/sec und 6 cm/sec und am meisten bevorzugt zwischen 3 cm/sec und 5 cm/sec ist.
19. Verfahren nach einem der vorhergehenden Beispiele 14 bis 18, **dadurch gekennzeichnet,** dass die Position der zu beschichtenden Bauteile erfasst wird und die Steuerung der relativen vertikalen Position zumindest des Eingangsbereich der Auslauftransporteinrichtung automatisch in Abhängigkeit von der Position der zu beschichtenden Bauteile durchgeführt wird.
20. Verfahren nach dem vorhergehenden Beispiel, **dadurch gekennzeichnet,** dass zu Beginn des Beschichtungsverfahrens der Eingangsbereich der Auslauftransporteinrichtung niedriger ist als der Ausgangsbereich der Einlauftransporteinrichtung.
21. Verfahren nach einem der vorhergehenden Beispiele 14 bis 20, **dadurch gekennzeichnet,** dass nach Beschichtung der plattenförmigen Bauteile diese mittels einer Digitaldruckeinrichtung mit einem Dekor bedruckt werden.
22. Anlage oder Verfahren nach einem der vorhergehenden Beispiele, **dadurch gekennzeichnet,** dass sich der Spalt zwischen der Einlauftransporteinrichtung und der Auslauftransporteinrichtung quer zur Transportrichtung der zu beschichtenden Bauteile erstreckt und die Länge des Spalts mindestens der Länge des Vorhangs entspricht.
23. Anlage oder Verfahren nach einem der vorhergehenden Beispiele, **dadurch gekennzeichnet,** dass die plattenförmigen Bauteile diskrete, starre Bauteile sind und vorzugsweise eine Länge von weniger als 4 m haben.
24. Anlage oder Verfahren nach einem der vorhergehenden Beispiele, **dadurch gekennzeichnet,** dass die plattenförmigen Bauteile OSB-Platten, MDF- oder HDF-Platten, Span-Platten, Voll- und Massivholzplatten, Furnierplatten oder Fertigparkettplatten sind.
25. Anlage oder Verfahren nach einem der vorhergehenden Beispiele, **dadurch gekennzeichnet,** dass die Einlauftransporteinrichtung und Auslauftransporteinrichtung nicht dazu eingerichtet sind bahnförmiges Material, wie etwa Papierbahnen, zu transportieren.
26. Verwendung einer Anlage zur Vorhangbeschichtung von plattenförmigen Bauteilen nach einem der Beispiele 1 bis 13 bzw. 22 bis 25 in einer Einrichtung zur Herstellung von direktbedruckten Fußbodenpaneelen, welche Einrichtung der Anlage zur Vorhangbeschichtung nachgeordnet eine Digitaldruckeinrichtung umfasst, um direkt auf eine Oberfläche der beschichteten Bauteile im Digitaldruck ein Dekor zu drucken.
27. Plattenförmiges Bauteil, insbesondere Fußbodenpaneel, beschichtet mit einem Verfahren nach einem der vorhergehenden VerfahrensBeispiele 14 bis 25.

## Patentansprüche

1. Anlage (10) zur Vorhangbeschichtung von plattenförmigen Bauteilen (60), umfassend:
- eine Vorrichtung (40) zum Erzeugen eines flüssigen Vorhangs (42) von Beschichtungsmaterial;
- eine Einlauftransporteinrichtung (20) und eine Auslauftransporteinrichtung (30), um die zu beschichtenden Bauteile durch den Vorhang (42) zu führen, wobei zwischen der Einlauftransporteinrichtung (20) und der Auslauftransporteinrichtung (30) ein Spalt vorgesehen ist, durch den überschüssiges Beschichtungsmaterial abführbar ist; **dadurch gekennzeichnet, dass** die Auslauftransporteinrichtung (30) und/oder die Einlauftransporteinrichtung (20) höhenverstellbar eingerichtet ist bzw. sind und die Anlage (10) weiter Stellmittel (36, 37) umfasst, die so eingerichtet sind, dass sie während des Beschichtungsbetriebs automatisch in Abhängigkeit der Position der zu beschichtenden Bauteile eine relative Höhenverstellung von Einlauftransporteinrichtung (20) und Auslauftransporteinrichtung (30) durchführen.

2. Anlage zur Vorhangbeschichtung nach Anspruch 1, **dadurch gekennzeichnet, dass** die Stellmittel (36, 37) so eingerichtet sind, dass sie automatisch eine Höhenverstellung an Auslauftransporteinrichtung (20) und/oder Einlauftransporteinrichtung (30) durchführen, um zumindest den Eingangsbereich der Auslauftransporteinrichtung anzuheben und/oder den Ausgangsbereich der Einlauftransporteinrichtung abzusenken, bevor der Endabschnitt eines zu beschichtenden Bauteils die Einlauftransporteinrichtung verlässt.

3. Anlage zur Vorhangbeschichtung nach Anspruch 2, **dadurch gekennzeichnet, dass** die Stellmittel (36, 37) so eingerichtet sind, dass sie dabei automatisch zumindest der Eingangsbereich der Auslauftransporteinrichtung (30) höher einstellen, als der Ausgangsbereich der Einlauftransporteinrichtung (20).

4. Anlage zur Vorhangbeschichtung nach einem der vorhergehenden Ansprüche, **dadurch gekennzeichnet, dass** die Stellmittel (36, 37) so eingerichtet sind, dass sie automatisch zumindest den Eingangsbereich der Auslauftransporteinrichtung (30) absenken und/oder den Ausgangsbereich der Einlauftransporteinrichtung (20) anheben, bevor ein vorderer Abschnitt eines zu beschichtenden Bauteils in Kontakt mit der Auslauftransporteinrichtung (30) kommt.

5. Anlage zur Vorhangbeschichtung nach dem vorhergehenden Anspruch, **dadurch gekennzeichnet, dass** die Stellmittel (36, 37) so eingerichtet sind, dass sie dabei automatisch zumindest den Eingangsbereich der Auslauftransporteinrichtung (30) niedriger einstellen, als den Ausgangsbereich der Einlauftransporteinrichtung (20).

6. Anlage zur Vorhangbeschichtung nach einem der vorhergehenden Ansprüche, **dadurch gekennzeichnet, dass** die Auslauftransporteinrichtung (30) an ihrem Ausgangsbereich drehbar gelagert (35) ist, um durch Drehung eine Höhenverstellung zumindest des Eingangsbereichs der Auslauftransporteinrichtung (30) zu bewirken und/oder dass die Einlauftransporteinrichtung an ihrem Eingangsbereich drehbar gelagert ist, um durch Drehung eine Höhenverstellung zumindest des Ausgangsbereichs der Einlauftransporteinrichtung zu bewirken.

7. Verfahren zum Beschichten von plattenförmigen Bauteilen mittels eines flüssigen Vorhangs von Beschichtungsmaterial, umfassend:
- Bereitstellen eines flüssigen Vorhangs von Beschichtungsmaterial;
- Bereitstellen einer Einlauftransporteinrichtung und einer Auslauftransporteinrichtung, um die zu beschichtenden Bauteile durch den Vorhang zu führen, wobei zwischen der Einlauftransporteinrichtung und der Auslauftransporteinrichtung ein Spalt vorgesehen ist, durch den überschüssiges Beschichtungsmaterial abführbar ist; wobei die Bauteile von der Einlauftransporteinrichtung durch den Vorhang zur Auslauftransporteinrichtung transportiert werden, **dadurch gekennzeichnet, dass** zumindest der Eingangsbereich der Auslauftransporteinrichtung in Relation zur Einlauftransporteinrichtung angehoben wird und/oder der Ausgangsbereich der Einlauftransporteinrichtung in Relation zur Auslauftransporteinrichtung abgesenkt wird, bevor der Endabschnitt eines zu beschichtenden Bauteils die Einlauftransporteinrichtung verlässt, wobei durch die Höheneinstellung von Einlauftransporteinrichtung und/oder Auslauftransporteinrichtung zumindest der Eingangsbereich der Auslauftransporteinrichtung höher eingestellt wird als der Ausgangsbereich der Einlauftransporteinrichtung.

8. Verfahren nach Anspruch 7, **dadurch gekennzeichnet, dass** nachdem der Endabschnitt eines vorhergehenden Bauteils die Einlauftransporteinrichtung verlassen hat, und vorzugsweise erst nachdem der Endabschnitt eines vorhergehenden Bauteils auch den Vorhang verlassen hat, zumindest der Eingangsbereich der Auslauftransporteinrichtung automatisch wieder absenkt wird und/oder zumindest der Ausgangsbereich der Einlauftransporteinrichtung automatisch angehoben wird, bevor ein vorderer Abschnitt eines nachfolgenden zu beschichtenden Bauteils in Kontakt mit der Auslauftransporteinrichtung kommt.

9. Verfahren nach dem vorhergehenden Anspruch, **dadurch gekennzeichnet, dass** dabei zumindest der Eingangsbereich der Auslauftransporteinrichtung niedriger eingestellt wird, als die Höhe des Ausgangsbereichs der Einlauftransporteinrichtung.

10. Verfahren nach einem der vorhergehenden Ansprüche 7 bis 9, **dadurch gekennzeichnet, dass** die Hubgeschwindigkeit zwischen 1 cm/sec und 10 cm/sec ist, vorzugsweise zwischen 1,5 cm/sec und 7 cm/sec, mehr bevorzugt 2 cm/sec und 6 cm/sec und am meisten bevorzugt zwischen 3 cm/sec und 5 cm/sec ist.

11. Verfahren nach einem der vorhergehenden Ansprüche 7 bis 10, **dadurch gekennzeichnet, dass** die Position der zu beschichtenden Bauteile erfasst wird und die Steuerung der relativen vertikalen Position zumindest des Eingangsbereich der Auslauftransporteinrichtung automatisch in Abhängigkeit von der Position der zu beschichtenden Bauteile durchgeführt wird.

12. Verfahren nach dem vorhergehenden Anspruch, **dadurch gekennzeichnet, dass** zu Beginn des Beschichtungsverfahrens der Eingangsbereich der Auslauftransporteinrichtung niedriger ist als der Ausgangsbereich der Einlauftransporteinrichtung.

13. Verfahren nach einem der vorhergehenden Ansprüche 7 bis 12, **dadurch gekennzeichnet, dass** nach Beschichtung der plattenförmigen Bauteile diese mittels einer Digitaldruckeinrichtung mit einem Dekor bedruckt werden.

14. Verwendung einer Anlage zur Vorhangbeschichtung von plattenförmigen Bauteilen nach einem der Ansprüche 1 bis 6 in einer Einrichtung zur Herstellung von direktbedruckten Fußbodenpaneelen, welche Einrichtung der Anlage zur Vorhangbeschichtung nachgeordnet eine Digitaldruckeinrichtung umfasst, um direkt auf eine Oberfläche der beschichteten Bauteile im Digitaldruck ein Dekor zu drucken.

15. Plattenförmiges Bauteil, insbesondere Fußbodenpaneel, beschichtet mit einem Verfahren nach einem der vorhergehenden Verfahrensansprüche 7 bis 13.

## Claims

1. Installation (10) for curtain-coating of panel-shaped components (60), comprising:
a device (40) to generate a liquid curtain (42) of coating material;
an inlet handling device (20) and an outlet handling device (30), to lead the components to be coated through the curtain (42), whereby there is a gap designed to be between the inlet handling device (20) and the outlet handling device (30), through which surplus coating material is dischargeable;
**characterized in that**
the outlet handling device (30) and/or the inlet handling device (20) is/are height-adjustable installed and the installation (10) comprises further adjustment means (36, 37), which are adopted to perform a relative height adjustment of inlet handling device (20) and outlet handling device (30) automatically during the coating-operation and depending on the position of the components to be coated.

2. Installation for curtain-coating according to claim 1, **characterized in that** the adjustment means (36, 37) are adopted such that they perform a height adjustment automatically at outlet handling device (30) and/or inlet handling device (20) to at least raise the entrance area of the outlet handling device and/or lower the exit area of the inlet handling device, before the end section of a component to be coated leaves the inlet handling device.

3. Installation for curtain-coating according to claim 2, **characterized in that** the adjustment means (36, 37) are adopted such that they thereby automatically adjust at least the entrance area of the outlet handling device (30) higher than the exit area of the inlet handling device (20).

4. Installation for curtain-coating according to any one of the preceding claims, **characterized in that** the adjustment means (36, 37) are adopted such that they automatically lower at least the entrance area of the outlet handling device (30) and/or raise the exit area of the inlet handling device (20), before a front section of a component to be coated comes into contact with the outlet handling device (30).

5. Installation for curtain-coating according to the preceding claim,
**characterized in that**
the adjustment means (36, 37) are adopted such that they thereby automatically adjust at least the entrance area of the outlet handling device (30) lower than the exit area of the inlet handling device (20).

6. Installation for curtain-coating according to any one of the preceding claims,
**characterized in that**
the outlet handling device (30) is pivot-mounted (35) at its exit area to cause a height adjustment at least of the entrance area of the outlet handling device (30) by pivoting and/or that the inlet handling device is pivot-mounted at its entrance area to cause a height adjustment at least of the exit area of the inlet handling device by pivoting.

7. Method for coating panel-shaped components by a liquid curtain of coating material, comprising:
providing a liquid curtain of coating material;
providing an inlet handling device and an outlet handling device to lead the components to be coated through the curtain, whereby there is a gap designed to be between the inlet handling device and the outlet handling device, through which surplus coating material is dischargeable; whereby the components will be transported from the inlet handling device through the curtain to the outlet handling device, **characterized in that**
at least the entrance area of the outlet handling device is raised in relation to the inlet handling device and/or the exit area of the inlet handling device is lowered in relation to the outlet handling device, before the end section of a component to be coated leaves the inlet handling device, whereby by the use of the height adjustment of inlet handling device and/or outlet handling device at least the entrance area of the outlet handling device is adjusted higher than the exit area of the inlet handling device.

8. Method according to claim 7, **characterized in that**
after the end section of a preceding component has left the inlet handling device, and preferably only after the end section of a preceding component has also left the curtain, at least the entrance area of the outlet handling device is again lowered automatically and/or at least the exit area of the inlet handling device is raised automatically, before a front section of a subsequent component to be coated comes into contact with the outlet handling device.

9. Method according to the preceding claim, **characterized in that** thereby at least the entrance area of the outlet handling device is adjusted lower than the height of the exit area of the inlet handling device.

10. Method according to any one of the preceding claims 7 to 9, **characterized in that**
the lift velocity is between 1 cm/sec and 10 cm/sec, preferably between 1.5 cm/sec and 7 cm/sec, more preferably 2 cm/sec and 6 cm/sec and most preferably is between 3 cm/sec and 5 cm/sec.

11. Method according to any one of the preceding claims 7 to 10, **characterized in that**
the position of the components to be coated is determined and the control of the relative vertical position at least of the entrance area of the outlet handling device is performed automatically according to the position of the components to be coated.

12. Method according to the preceding claim, **characterized in that** in the beginning of the coating process the entrance area of the outlet handling device is lower than the exit area of the inlet handling device.

13. Method according to any one of the preceding claims 7 to 12, **characterized in that**
after coating the panel-shaped components they are printed with a décor by means of a digital printing device.

14. Use of an installation for curtain-coating of panel-shaped components according to any one of the claims 1 to 6 in a device for the manufacturing of directly printed floor panels, which device includes a digital printing device subordinated to the installation for curtain-coating to directly print a décor onto a surface of the coated components by means of digital printing.

15. Panel-shaped component, in particular floor panel, coated by a method according to any one of the preceding method claims 7 to 13.

## Revendications

1. Installation (10) d'enduction au rideau d'éléments de construction en forme de plaques (60), comprenant :
- un dispositif (40) pour produire un rideau liquide (42) de matière de revêtement ;
- un dispositif d'amenée (20) et un dispositif d'évacuation (30) pour conduire les éléments de construction à enduire à travers le rideau (42), entre le dispositif d'amenée (20) et le dispositif d'évacuation (30) étant ménagé un interstice à travers lequel la matière de revêtement excédentaire peut être évacuée ; **caractérisée en ce que** le dispositif d'évacuation (30) et/ou le dispositif d'amenée (20) est, respectivement, sont agencé(s) avec une possibilité de réglage en hauteur, et l'installation (10) comporte également des moyens de réglage (36, 37) qui sont agencés de façon à procéder automatiquement, lors de l'opération d'enduction, à un réglage en hauteur relatif du dispositif d'amenée (20) et du dispositif d'évacuation (30) en fonction de la position des éléments de construction à enduire.

2. Installation d'enduction au rideau selon la revendication 1, **caractérisée en ce que** les moyens de réglage (36, 37) sont agencés de façon à procéder automatiquement à un réglage en hauteur sur le dispositif d'évacuation (20) et/ou sur le dispositif d'amenée (30) pour au moins lever la zone d'entrée du dispositif d'évacuation et/ou baisser la zone de sortie du dispositif d'amenée avant que la portion terminale d'un élément de construction à enduire ne quitte le dispositif d'amenée.

3. Installation d'enduction au rideau selon la revendication 2, **caractérisée en ce que** les moyens de réglage (36, 37) sont agencés de façon à positionner alors automatiquement au moins la zone d'entrée du dispositif d'évacuation (30) plus haut que la zone de sortie du dispositif d'amenée (20).

4. Installation d'enduction au rideau selon une des revendications précédentes, **caractérisée en ce que** les moyens de réglage (36, 37) sont agencés de façon à baisser automatiquement au moins la zone d'entrée du dispositif d'évacuation (30) et/ou à lever la zone de sortie du dispositif d'amenée (20) avant qu'une portion avant d'un élément de construction à enduire n'entre en contact avec le dispositif d'évacuation (30).

5. Installation d'enduction au rideau selon la revendication précédente, **caractérisée en ce que** les moyens de réglage (36, 37) sont agencés de façon à positionner alors automatiquement au moins la zone d'entrée du dispositif d'évacuation (30) plus bas que la zone de sortie du dispositif d'amenée (20).

6. Installation d'enduction au rideau selon une des revendications précédentes, **caractérisée en ce que** le dispositif d'évacuation (30) est monté pivotant (35) dans sa zone de sortie pour opérer par rotation un réglage en hauteur au moins de la zone d'entrée du dispositif d'évacuation (30) et/ou **en ce que** le dispositif d'amenée est monté pivotant dans sa zone d'entrée pour opérer par rotation un réglage en hauteur au moins de la zone de sortie du dispositif d'amenée.

7. Procédé d'enduction d'éléments de construction en forme de plaques au moyen d'un rideau liquide, consistant à :
- mettre en oeuvre un rideau liquide de matière de revêtement ;
- mettre en oeuvre un dispositif d'amenée et un dispositif d'évacuation pour conduire les éléments de construction à enduire à travers le rideau, entre le dispositif d'amenée et le dispositif d'évacuation étant ménagé un interstice à travers lequel la matière de revêtement excédentaire peut être évacuée ; les éléments de construction étant transportés par le dispositif d'amenée à travers le rideau jusqu'au dispositif d'évacuation, **caractérisé en ce qu'**au moins la zone d'entrée du dispositif d'évacuation est levée en relation avec le dispositif d'amenée et/ou la zone de sortie du dispositif d'amenée est baissée en relation avec le dispositif d'évacuation avant que la portion terminale d'un élément de construction à enduire ne quitte le dispositif d'amenée, le réglage en hauteur du dispositif d'amenée et/ou du dispositif d'évacuation ayant pour effet de positionner au moins la zone d'entrée du dispositif d'évacuation plus haut que la zone de sortie du dispositif d'amenée.

8. Procédé selon la revendication 7, **caractérisé en ce que**, après que la portion terminale d'un élément de construction précédent a quitté le dispositif d'amenée et, de préférence, seulement après que la portion terminale d'un élément de construction précédent a également quitté le rideau, au moins la zone d'entrée du dispositif d'évacuation est automatiquement rabaissée et/ou au moins la zone de sortie du dispositif d'amenée est automatiquement levée avant qu'une portion avant d'un élément de construction suivant à enduire n'entre en contact avec le dispositif d'évacuation.

9. Procédé selon la revendication précédente, **caractérisé en ce qu'**au moins la zone d'entrée du dispositif d'évacuation est alors positionnée plus bas que la hauteur de la zone de sortie du dispositif d'amenée.

10. Procédé selon une des revendications précédentes 7 à 9, **caractérisé en ce que** la vitesse de levage est comprise entre 1 cm/sec et 10 cm/sec, de préférence entre 1,5 cm/sec et 7 cm/sec, plus préférablement 2 cm/sec et 6 cm/sec et, le plus préférablement, entre 3 cm/sec et 5 cm/sec.

11. Procédé selon une des revendications précédentes 7 à 10, **caractérisé en ce que** la position des éléments de construction à enduire est détectée et la commande de la position verticale relative au moins de la zone d'entrée du dispositif d'évacuation est effectuée automatiquement en fonction de la position des éléments de construction à enduire.

12. Procédé selon la revendication précédente, **caractérisé en ce que**, au début du processus d'enduction, la zone d'entrée du dispositif d'évacuation est plus basse que la zone de sortie du dispositif d'amenée.

13. Procédé selon une des revendications précédentes 7 à 12, **caractérisé en ce que**, après l'enduction des éléments de construction en forme de plaques, ceux-ci sont imprimés avec un décor au moyen d'un dispositif d'impression numérique.

14. Utilisation d'une installation d'enduction au rideau d'éléments de construction en forme de plaques selon une des revendications 1 à 6 dans un dispositif de fabrication de lambris de sol imprimés directement, lequel dispositif comporte, en aval de l'installation d'enduction au rideau, un dispositif d'impression numérique pour imprimer directement en impression numérique un décor sur une surface supérieure des éléments de construction enduits.

15. Élément de construction en forme de plaque, en particulier lambris de sol, enduit avec un procédé selon une des revendications de procédé précédentes 7 à 13.
